# EUROPÄISCHE PATENTSCHRIFT

(11) **EP 0 845 517 B1**
(45) Veröffentlichungstag und Bekanntmachung des Hinweises auf die Patenterteilung: **29.08.2001**
(21) Anmeldenummer: 97120421.9
(22) Anmeldetag: 21.11.1997
(51) Int. Cl.: C09J 7/02

(54) **Verwendung eines Klebeband-Abschnitts**
Use of a section of adhesive tape
Utilisation d'un morceau de ruban adhésif

(30) Priorität: 02.12.1996 DE 19649636
(43) Veröffentlichungstag der Anmeldung: 03.06.1998
(73) Patentinhaber: Beiersdorf Aktiengesellschaft, 20245 Hamburg (DE)
(72) Erfinder: Leiber, Jörn, Dr., 25524 Heiligenstedtenerkamp (DE); Lühmann, Bernd, Dr., 22846 Norderstedt (DE); Raadts, Thomas, 22850 Norderstedt (DE); Schliephacke, Ralf, 25524 Itzehoe (DE); Kubasch, Peter, 23554 Lübeck (DE); Chal, Jan, 83105 Bratislava (CZ); Linde, Hansjürgen, Prof. Dr., 96450 Coburg (DE); Neumann, Uwe, 96414 Coburg (DE); Hazes, Hans, 3641 PH Mijdrecht (NL)

(56) Entgegenhaltungen:
- EP-A- 0 735 121
- DE-A- 4 431 914

## Beschreibung

Die Erfindung betrifft die Verwendung eines Klebeband-Abschnitts für rückstandsfrei und zerstörungsfrei wiederlösbare Verklebungen durch Ziehen/Verstrecken in der Verklebungsebene.

Hochdehnbare elastisch oder plastisch unter Verstreckung deformierende, einseitig oder beidseitig haftklebrige Selbstklebebänder (Klebstoff-Folien), die durch Ziehen im wesentlichen in Richtung ihrer Verklebungsebene rückstands- und zerstörungsfrei wiederablösbar sind, sind bekannt Mit ihnen hergestellte Verklebungen bieten kraftvollen Halt und lassen sich doch spurlos wiederablösen ohne oder mit nur geringer Beschädigung des Untergrundes oder der Fügeteile. Beispielhafte Klebebänder vorgenannter Art sind in US 4,024,312, DE 33 31 016, DE 4.222.849, WO 92/11332, WO 92/11333, US 5,516,581 und WO 95/06691 beschrieben. Eine häufige Konfektionierform entsprechender Produkte sind Selbstklebebandzuschnitte, z. B. in Form rechteckiger Streifen, welche an einem Ende einen klebfreien Anfasserbereich besitzen (siehe DE 4.222.849, WO 92/11333 bzw. US 5,516,581). Der Anfasser dient als Griffläche für ein späteres Wiederablösen des Klebebandes.

Praktische Probleme mit o. g. Produkten treten dann auf, wenn im Falle von doppelseitig haftklebrigen Selbstklebebändern, das Selbstklebeband beim Ablöseprozeß reißt. Dieser Problematik nehmen sich insbesondere DE 4.222.849. DE 4.428.578 und DE 4.431.914 an. In DE 4.222.849 beschriebene Klebebänder nutzen UV-undurchlässsige Anfasserabdeckungen, welche die Reißerneigung im Anfasserbereich nach UV-Exposition reduzieren bzw. verhindern sollen. In DE 4.428.578 beschriebene Klebebänder verfügen über ein besonders ausgeformtes Ende, welches einem partiellen Reißen des Klebebandes zum Ende des Ablöseprozesses entgegenwirkt. DE 4.431.914 beschreibt Klebebänder, welche im Anfasserbereich u. a. spezielle Folien- oder Papierabdeckungen aufweisen, die eine geringe Adhäsion zur verwendeten Selbstklebemasse besitzen, wodurch die Reißerneigung im Bereich des klebfreien Anfassers reduziert wird. Eine allgemeine Lösung der Reißerproblematik steht dennoch aus.

Ein weiteres Problem bei durch Verstrecken im wesentlichen in der Verklebungsebene wiederablösbaren Klebebändern besteht darin, daß durch die beim Ablöseprozeß auf die Verklebungsuntergründe einwirkende Scherkraft eine partielle Schädigung oder Zerstörung selbiger auftreten kann. Insbesondere DE 4.428.578 nimmt sich dieser Schwierigkeit an und befürwortet eine Lösung durch spezielle geometrische Ausformung der Klebstoff-Folien an ihrem Ende. Dies ist jedoch im Hinblick auf eine verlustfreie Produktion oft nur schwierig umzusetzen. Eine allgemeine Lösung der aufgeführten Problematik steht aus.

Ein bevorzugtes Anwendungsgebiet von durch Verstrecken im wesentlichen in der Verklebungsebene rückstands- und zerstörungsfrei wiederablösbaren Selbstklebebändern ist die Verklebung flexibler Materialien, wie z. B. Postern. Häufig soll z. B. aus ästhetischen Gründen hierbei eine verdeckte Verklebung vorgenommen werden, d. h. das Klebeband soll vollständig hinter dem zu verklebenden Gegenstand verbleiben, derart, daß auch der Anfasser im verklebten Zustand nicht sichtbar ist. Zum Wiederablösen ist ein leichtes und einfaches Auffinden des Anfassers erwünscht. In der Praxis zeigt sich jedoch, daß der Kunde häufig vergessen hat, wie die Klebebänder bei der Fixierung verklebt wurden, wo sich also der Anfasser befindet. Ggf. ist das Selbstklebeband versehentlich oder aus Unkenntnis auch derart verklebt worden, daß der Anfasserbereich nach innen zum Poster liegt und somit gar nicht erreichbar ist, die Verklebung mithin nicht wieder ohne Schädigung oder Zerstörung des verklebten Gegenstandes oder des Untergrundes vorgenommen werden kann.

Aus WO 92/11333 sind entfernbare Klebebänder bekannt, die durch Ziehen in Richtung ihrer Verklebungsebene entklebt werden können, unter anderem gemäß Figur 8 und den dazu gehörigen Passagen der Beschreibung auf S. 15, Zeile 25 bis S. 16, Zeile 4, nämlich durch Ziehen in Pfeilrichtung, wobei Figur 8 ein Klebeband mit zwei überstehenden Teilen zeigt, ohne daß daraus etwas zur besonderen Anwendung hergeleitet werden könnte.

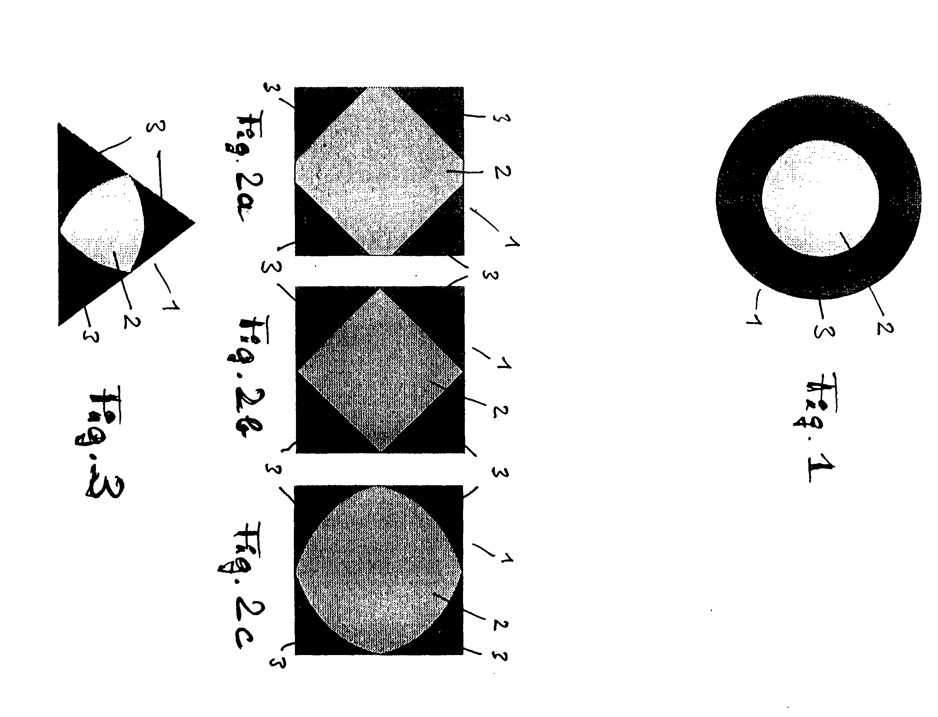

In EP 747 027 A2 wird nachpubliziert ein entsprechendes Klebeband mit zwei Anfassern beschrieben, nämlich ein länglicher Streifen mit je einem Anfasser an den beiden Enden, sowie gemäß Figur 3 eine viereckige Ausgestaltung mit Anfasserbereichen an allen vier Seiten.

Aufgabe der vorliegenden Erfindung war es, die vorgenannten Nachteile zu überwinden, insbesondere Selbstklebebänder zu erhalten, welche:
- durch Verstrecken im wesentlichen in der Verklebungsebene rückstands- und zerstörungsfrei wiederablösbar sind,
- sich auch im Falle von Reißern während des Ablöseprozesses dennoch rückstandsfrei und zerstörungsfrei wiederablösen lassen und
- bei denen auch bei verdeckter Verklebung flexibler Materialien der Anfasser schnell und einfach gefunden werden kann und insbesondere
- ein Fehlverkleben der Klebebandzuschnitte nicht möglich ist.

Gelöst wird dieses durch die Verwendung von Klebeband-Abschnitten, wie näher in den Ansprüchen gekennzeichnet, insbesondere:
- durch Verstrecken im wesentlichen in der Verklebungsebene rückstands- und zerstörungsfrei wiederablösbare Klebebandzuschnitte, welche
- über Anfasser bzw. Anfasserbereiche verfügen, die
- an einen zentralen haftklebrigen Bereich angrenzen, wobei
- Anfasser bzw. die Anfasserbereiche in mehreren Richtungen vom zentralen haftklebrigen Bereich abstehen, und dabei gemäß Anspruch 1 ausgestaltet sind.

### Beispielhafte Anwendungen:

Rückstandsfrei und zerstörungsfrei wiederablösbare Selbstklebebänder für:
- die Fixierung von Postern, Bildern, Kalendern, Postkarten, Hinweisschilder, selbstklebenden Haken, auch vorkonfektioniert.
- bevorzugt für die Verklebung flexibler Materialien, so daß die Anfasserbereiche auch bei verdeckt vorgenommener Verklebung leicht aufzufinden sind und Fehlverklebungen mit z. B. nicht zugänglichem Anfasserbereich ausgeschlossen sind.

Erfindungsgemäß genutzt werden können hochverstreckbare elastisch oder auch plastisch unter Dehnung verformende Klebebänder, die für Verklebungen geeignet sind, welche durch Ziehen im wesentlichen in Richtung der Verklebungsebene rückstands- und zerstörungsfrei wiederablösbar sind, entsprechend u. a. US 4,024,312, DE 33 31 016, WO 92/11332, US 5,516,581 und WO 95/06691. Klebebänder können einseitig oder beidseitig haftklebrig oder auch einseitig oder beidseitig mit einer thermisch aktivierbaren Klebmasse ausgerüstet sein. Ihr Aufbau kann einschichtig oder mehrschichtig ausgeführt sein. Im Falle beidseitig haftklebriger Selbstklebebänder können als Zwischenträger elastisch oder plastisch deformierende Materialien genutzt werden. Hierin eingeschlossen sind neben Kunststoff-Folien insbesondere Klebmassen als Zwischenschichten und schaumstoffhaltige Zwischenträger.

Im folgenden soll die Erfindung anhand von Ausführungsbeispielen und Figuren erläutert werden, ohne diese dadurch aber unnötig einschränken zu wollen. Es zeigen
- Fig. 1: eine Draufsicht auf einen erfindungsgemäßen Klebeband-Abschnitt,
- Fig. 2a, 2b, 2c und Fig. 3: jeweils Draufsichten auf weitere Ausführungsformen.

In diesen Figuren 1, 2a - c und 3 sind jeweils Klebeband-Abschnitte 1 dargestellt, mit klebenden Bereichen 2 und Anfassern bzw. Anfasserbereichen 3.

Erfindungsgemäße Klebebänder werden in konfektionierter Form, etwa in Form von Stanzlingen oder Zuschnitten eingesetzt. Konfektionierte Ware weist einen zentralen haftklebrigen Bereich auf. An diesen angrenzend finden sich mehrere, jedoch wenigstens zwei Anfasserbereiche. In einer speziellen Ausführung liegt um den zentralen haftklebrigen Bereich ein zusammenhängender peripherer Anfasserbereich (Figur 1).

Bevorzugte Ausführungsformen sind solche mit drei im Winkel von etwa 120° und mit vier im Winkel von ca 90° gegeneinander angeordneten Anfasserbereichen (Figur 2a, b, c).

Eine besonders bevorzugte Ausführungsform ist die eines gleichseitigen Dreiecks. Die Spitzen des Dreiecks bilden drei Anfasserbereiche, mittig liegt der haftklebrige Bereich (Figur 3). Die Anfasserbereiche sind derart ausgeführt, daß die Begrenzungen zum haftklebrigen Innenbereich konvex zu den Dreiecksspitzen verlaufen. Dies ermöglicht eine hohe Verklebungsfläche bezogen auf die Gesamtfläche des Klebebandzuschnittes. Gleichzeitig laufen die den Dreiecksspitzen gegenüberliegenden haftklebrigen Bereiche spitz zu. Somit können die Vorteile von DE 4.428.578 genutzt werden.

Sämtliche Figuren verstehen sich als beispielhaft herausgegriffen aus einer Vielzahl weiterer Möglichkeiten.

Konfektionierformen umfassen neben Klebebandstücken definierter Abmessungen, z. B. in Form von Stanzlingen oder Zuschnitten, wie zuvor beschrieben, gleichfalls Klebebandrollen, bei denen erst der Nutzer den endgültigen Zuschnitt des zu verwendenden Selbstklebebandes durch z. B. Zuschneiden vornimmt. Beispiel für eine entsprechende Klebebandrolle ist die eines mit z. B. einem Trennpapier abgedeckten doppelseitig haftklebrigen Klebebandes, dessen Haftklebmasseoberfläche in beiden Kantenbereichen beidseitig durch z. B. Auflegen einer dünnen Polyesterfolie inertisiert wurde. Durch einfaches Zuschneiden erhält man aus vorgenannter Rolle Zuschnitte.

Erfindungsgemäße Klebebänder lassen sich ausgehend von ein- oder beidseitig haftklebrigen Selbstklebebänder, welche durch Verstrecken im wesentlichen in Richtung der Verklebungsebene rückstands- und zerstörungsfrei wiederablösbar sind, durch partielle Inertisierung der Haftkleberoberfläche selbiger Klebebänder erhalten.

Die Inertisierung der Klebmasseoberfläche kann durch Abdeckung durch z. B. dünne Folien aus z. B. Kunststoff oder durch Abdeckung mit dünnen Papieren vorgenommen werden. Alternativ kann eine Beschichtung oder Bedruckung der zu inertisierenden Haftklebmassebereiche mittels eines nicht klebrigen Lacks oder eines nichtklebrigen pulverförmigen Materials durchgeführt werden. Bevorzugterweise wird die Inertisierung entsprechend DE 4.431.914 realisiert.

Alternativ besteht die Möglichkeit erfindungsgemäße Selbstklebebänder durch selektive Beschichtung geeigneter nicht haftklebriger Trägermaterialien zu erhalten. In diesem Fall werden die Anfasserbereiche durch den genutzten Träger gestellt, welcher derart partiell mit Klebmasse beschichtet oder bedruckt wurde, daß die Anfasserbereiche nicht mit Klebstoff bedeckt sind.

Bevorzugt wird die Inertisierung der Klebmassenoberfläche bzw. die Beschichtung eines geeigneten Trägers mit Haftklebemasse bei beidseitig haftklebrigen Klebstoff-Folien näherungsweise deckungsgleich auf beiden Seiten durchgeführt.

### Beispiele

### Poster-Verklebung

Vier Klebstoff-Folienstücke werden zur Befestigung eines Posters auf einer mit gestrichener Rauhfasertapete versehenen Wand (Tapete: Erfurt Körnung 52; Farbe: Herbol Zenit LG; Tapete verklebt auf Preßspanplatte) verwendet Hierzu werden von den Klebstoff-Folien einseitig die Trennpapiere entfernt, danach die einseitig vom Trennpapier befreiten Klebstoff-Folien mit ihrer haftklebrigen Seite rückseitig in den vier Eckbereichen des Posters derart fixiert, daß eine verdeckte Verklebung des Posters vorgenommen werden kann. In einem zweiten Schritt werden die rückseitigen Trennpapiere der Klebstoff-Folien abgezogen und das Poster verklebt. Zum Wiederablösen der Poster ist durch vorsichtiges Vorklappen der Posterecken in allen Fällen ein Anfasser sichtbar, wodurch ein unkompliziertes Ablösen möglich ist. Ein Fehlverkleben, wie es bei nur einseitig mit einem Anfasser versehenen Klebstoff-Folien möglich ist, wenn die Anfasser in Richtung zur Postermitte verklebt werden, ist nicht möglich.

### Rezeptur I

80 Tln. Europrene Sol T 193B (EniChem)
20 Tln. Vector 4261 (Exxon Chemicals)
100 Tln, Foralyn 110 (Hercules)
1 Tln. Irganox 1010 (Ciba)

### Beispiel 1

Kreisförmige 1 mm dicke einschichtige Klebfolienstanzlinge (Klebmasse entsprechend Rezeptur 1) vom Durchmesser 60 mm werden beidseitig in einem Randbereich von 20 mm durch Bepudern mit Titandioxid (Kronos 2210) klebfrei gestaltet, entsprechend Figur 1. Eine Posterverklebung wird durchgeführt. Als Haftgrund wird eine glatte, resopalbeschichtete Preßspanplatte eingesetzt. Durch den kreisrunden Anfasserbereich läßt sich der Anfasser für den Ablöseprozeß sofort finden. Ein Fehlverkleben, wie es bei nur einseitig mit einem Anfasser versehenen Klebstoff-Folien möglich ist, wenn die Anfasser in Richtung zur Postermitte verklebt werden, ist nicht möglich.

### Beispiel 2

Gleichseitig dreieckige Klebfolien-Stücke mit einer Kantenlänge von 60 mm und einer Dicke von 1 mm (Klebmasse entsprechend Rezeptur 1) werden beidseitig deckungsgleich mit 12 µm dicker einseitig silikonisierter Polyesterfolie eingedeckt. Die haftklebrigen Mittelbereiche der so erhaltenen Klebstoff-Folien sind zum Schutz beidseitig mit silikonisiertem Trennpapier abgedeckt. Die so erhaltenen Klebstoff-Folienstücke sind aufgrund des spitzen Zulaufens der den Anfassem gegenüberliegenden haftklebrigen Bereiche insbesondere für ein zerstörungsfreies Wiederablösen auch von sehr empfindlichen Untergründen geeignet.

Selbst bei Reißen eines Anfassers (verursacht z. B. durch sehr schnelles Verstrecken der Klebstoff-Folien, ausgehend von einem Anfasser, wobei dieser nur am äußersten Ende ergriffen wird) ist ein zerstörungsfreies Ablösen über einen der verbleibenden beiden Anfasser möglich.

## Patentansprüche

1. Verwendung eines Klebeband-Abschnitts mit klebendem Bereich und Anfassem für eine rückstandsfrei und zerstörungsfrei wiederlösbare Verklebung, wobei der Klebeband-Abschnitt ein solcher ist, der durch Ziehen/Verstrecken in der Verklebungsebene lösbar ist, **dadurch gekennzeichnet**, daß der Klebeband-Abschnitt mehreckig oder rund ausgestaltet ist, bei mehreckiger Ausgestaltung mit drei im Winkel von etwa 120° bzw. vier im Winkel von etwas 90° gegeneinander angeordneten Anfasserbereichen, bzw. bei runder Ausgestaltung mit einem Anfasserbereich der den gesamten klebenden Bereich umgibt, und daß der Klebeband-Abschnitt beidseitig selbstklebend ausgerüstet ist.

2. Verwendung nach Anspruch 1, **dadurch gekennzeichnet**, daß der Klebeband-Abschnitt aus einem hochverstreckbaren, elastisch oder plastisch unter Dehnung verformbaren Material besteht.

3. Verwendung nach Anspruch 1, **dadurch gekennzeichnet**, daß die Anfasser um den klebenden Bereich herum angeordnet sind.

4. Verwendung nach Anspruch 1, **dadurch gekennzeichnet**, daß die Anfasser symmetrisch zu einem gedachten Mittelpunkt des Klebeand-Abschnitts angeordnet sind.

5. Verwendung anch Anspruch 1, **dadurch gekennzeichnet**, daß die Anfasser Bereiche abdecken, die den klebenden Bereich zumindest teilweise umschließen.

6. Vewendung nach Anspruch 1, **dadurch gekennzeichnet**, daß der Klebeband-Abschnitt dreieckig oder viereckig ausgestattet ist, die Anfasser in den Ecken angeordnet sind und den gesamten klebenden Bereich umfassen.

## Claims

1. Use of an adhesive tape section with an adhesive region and grip tabs for a bond which can be released again without residue or destruction, the adhesive tape section being releasable by pulling/stretching in the bond plane, **characterized in that** the adhesive tape section is polygonal or circular in design, in the case of a polygonal design having three grip-tab regions at an angle of about 120° or four grip-tab regions at an angle of about 90° to one another, and in the case of a circular design having a grip-tab region which surrounds the entire adhesive region, and in that the adhesive tape section is treated so as to be self-adhesive on both sides.

2. Use according to Claim 1, **characterized in that** the adhesive tape section consists of a highly stretchable material which can be deformed elastically or plastically on extension.

3. Use according to Claim 1, **characterized in that** the grip tabs are arranged around the adhesive region.

4. Use according to Claim 1, **characterized in that** the grip tabs are arranged symmetrically about an imaginary centre point of the adhesive tape section.

5. Use according to Claim 1, **characterized in that** the grip tabs cover regions which surround, at least in part, the adhesive region.

6. Use according to Claim 1, **characterized in that** the adhesive tape section is triangular or quadrangular in design, and the grip tabs are arranged in the angles and embrace the entire adhesive region.

## Revendications

1. Utilisation d'un coupon de bande adhésive avec une zone adhésive et des onglets pour un collage détachable sans résidus et sans dommages, dans laquelle le coupon de bande adhésive est un coupon qui est détachable par traction/étirage dans le plan de collage, **caractérisée en ce que** le coupon de bande adhésive est de forme polygonale ou ronde, la forme polygonale ayant trois zones d'onglet disposées à des angles d'environ 120° ou quatre zones d'onglet disposées à des angles d'environ 90° les unes par rapport aux autres, respectivement la forme ronde ayant une zone d'onglet qui entoure toute la zone adhésive, et en ce que le coupon de bande adhésive est autocollant sur les deux faces.

2. Utilisation suivant la revendication 1, **caractérisée en ce que** le coupon de bande adhésive se compose d'une matière hautement extensible, déformable élastiquement ou plastiquement par allongement.

3. Utilisation suivant la revendication 1, **caractérisée en ce que** les onglets sont disposés autour de la zone adhésive.

4. Utilisation suivant la revendication 1, **caractérisée en ce que** les onglets sont disposés symétriquement par rapport à un point central virtuel du coupon de bande adhésive.

5. Utilisation suivant la revendication 1, **caractérisée en ce que** les onglets masquent des zones, qui entourent au moins en partie la zone adhésive.

6. Utilisation suivant la revendication 1, **caractérisée en ce que** le coupon de bande adhésive est de forme triangulaire ou carrée, et en ce que les onglets sont disposés dans les angles et entourent toute la zone adhésive.
